# EUROPEAN PATENT SPECIFICATION

(11) **EP 2 810 789 B1**
(45) Date of publication and mention of the grant of the patent: **30.05.2018**
(21) Application number: 13743145.8
(22) Date of filing: 31.01.2013
(51) Int. Cl.: B60B 35/14, B21D 39/00, C21D 9/32, C22C 38/00, C22C 38/22, F16C 19/38, F16C 35/063, F16C 35/07, B60B 27/00

(54) **BEARING DEVICE FOR WHEEL**
RADLAGERVORRICHTUNG
DISPOSITIF DE PALIER POUR ROUE

(30) Priority: 01.02.2012 JP 2012019966
(43) Date of publication of application: 10.12.2014
(73) Proprietor: NTN Corporation, Osaka-shi, Osaka 550-0003 (JP)
(72) Inventor: UMEKIDA, Mitsuru, Iwata-shi, Shizuoka (JP)
(74) Representative: Cohausz & Florack
(86) International application number: PCT/JP2013/052218
(87) International publication number: WO 2013/115319

(56) References cited:
- WO-A1-2007/111316
- WO-A1-2008/142844
- WO-A1-2012/176787
- JP-A- H08 105 908
- JP-A- S58 122 205
- JP-A- 2001 191 714
- JP-A- 2007 263 213
- JP-A- 2009 255 659
- JP-A- 2011 025 732
- JP-B2- 4 466 302
- US-B1- 6 193 419

## Description

### Field of the Invention

The present invention relates to a wheel bearing apparatus for freely rotationally supporting a wheel of a vehicle such as an automobile, and more particularly to a wheel bearing apparatus having a clutch function for switching a wheel to a driving mode or a non-driving mode.

### Description of Background Art

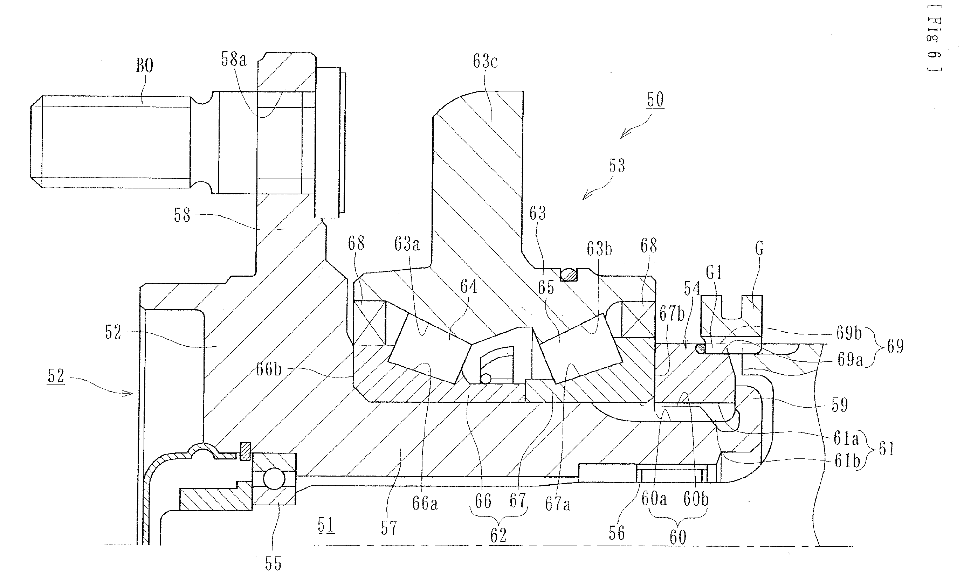

In automobiles of a 4-wheel driving type, there is a type which can selectively switch front wheels or rear wheels to driving wheels or driven wheels with using a clutch function provided with a wheel bearing apparatus. Such a wheel bearing apparatus 50 having the clutch function comprises as shown in Fig. 6 a hub wheel 52 coaxially mounted on an axle 51 of a driving train, a double row tapered roller bearing 53 as a rolling bearing mounted on the hub wheel 52 at its axially center portion, and a gear member 54 axially juxtaposed by the double row tapered roller bearing 53. In addition, the wheel bearing apparatus 50 is coaxially supported on the axle 51 via a deep groove ball bearing 55 and a needle bearing 56 arranged between the axle 51 and the hub wheel 52. A reference character "G" denotes a slide gear.

The hub wheel 52 comprises a cylindrical portion 57 formed coaxially with the axle 51, a flange 58 radially extending from the cylindrical portion 57 near the outer-side end thereof, and a caulked portion 59 formed by bending an inner-side end of the cylindrical portion 57 radially outward. A hub-splined portion 60 comprising a plurality of spline recesses (spline grooves) 60a and a plurality of spline projections 60b alternately arranged each other on the outer circumference of the cylindrical portion 57 near the caulked portion 59. The hub-splined portion 60 is engaged with an inner circumferential splined portion 61 comprising spline recesses 61a and spline projections 61b formed on the inner circumference of the gear member 54. The flange 58 is formed with a plurality of through apertures 58a through which fastening members BO such as bolts are inserted to fasten a wheel (not shown).

The double row tapered roller bearing 53 comprises an inner ring 62, an outer member 63, double row tapered rollers 64, 65 juxtaposed in an axial direction between the inner ring 62 and the outer member 63.

In more detail, the inner ring 62 comprises a first inner ring member 66 having a first raceway surface 66a and a second inner ring member 67 having a second raceway surface 67a. The first inner ring member 66 and the second inner ring member 67 are arranged so that they are abutted against each other, an outer-side end face 66b of the first inner ring member 66 is abutted against a root portion of the flange 58 of the hub wheel 52, and inner-side end face 67b of the second inner ring member 67 is abutted against an end face of the gear member 54. Accordingly, the gear member 54 and the inner ring 62 (first and second inner ring members 66, 67) forming the double row tapered roller bearing 53 are firmly secured so as not to be rotated relative to the hub wheel 52.

On the other hand, the outer ring 63 comprises a first raceway surface 63a, s second raceway surface 63b, and a flange portion 63c extending radially outward. The flange portion 63c is adapted to be secured to a steering knuckle (suspension apparatus) of a vehicle. A numeral 68 denotes sealing members.

The gear member 54 has a generally annular configuration and is axially juxtaposed by the second inner member 67 so that it is abutted against the end face 67b of the second inner ring member 67. The outer circumference of the gear member 54 is formed with a plurality of spline recesses (spline grooves) 69a and a plurality of spline projections 69b forming an outer circumferential splined portion 69. The outer circumferential splined portion 69 is adapted to be engaged with a splined portion G1 of the gear ring G.

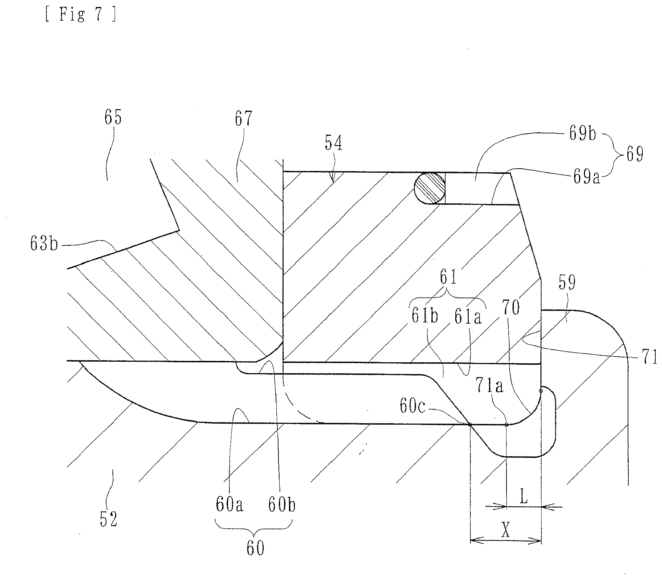

As shown in Fig. 7, the inner circumferential edge at its inner-side of the spline projection 61b of the inner circumferential splined portion 61 of the gear member 54 is chamfered to form an inner-side chamfered portion 70 having a curved surface. The chamfered portion 70 is designed to be positioned inner-side of the splined portion 60 of the hub wheel 52. In particular, it is designed so that a distance L is smaller than a distance X wherein the distance L is a distance from the inner-side end face 71 of the gear member 54 to the outer-side end 71a of the chamfered portion 70 and the distance X is a distance from the inner-side end face 71 of the gear member 54 to the end point 60c of the spline recess 60a of the hub-splined portion 60 of the hub wheel 52. Thus, it is possible to increase the bending radius of the caulked portion 59 formed on the inner-side end of the cylindrical portion of the hub wheel 52 and accordingly to effectively suppress generation of cracks in the root of the caulked portion 59 (e.g. see Patent Document 1 below).
From patent document JP 2001 191 714 A, it is also known a wheel bearing apparatus according to the preamble of claim 1.

### Document of the Prior Art

### Patent Document

Patent Document 1: Japanese Patent No. 4466302

### Disclosure of the Invention

### Problems to be solved by the Invention

As described above, it is possible in the wheel bearing apparatus of the prior art technology to increase the bending radius of the caulked portion 59 and accordingly to effectively suppress generation of cracks in the root of the caulked portion 59. When the driving torque is inputted to the gear member 54 from the driving/non-driving switching system, the gear member 54 transmits the driving torque to the hub wheel 52 via the inner circumferential splined portion 61. Although the inner circumferential splined portion 61 of the gear member 54 is hardened by heat treatment, the hub-splined portion 60 of the hub wheel 52 is rare and not hardened. Thus, allowable torque of the hub-splined portion 60 is limited and therefore it is required to reduce the torque applied to the hub-splined portion 60.

It is, therefore, an object of the present invention to provide a wheel bearing apparatus which can reduce the torque applied to the splined portion of the hub wheel and thus can improve the durability of the hub wheel.

For achieving the object of the present invention, there is provided according to the present invention of claim 1 a wheel bearing apparatus comprising an outer member integrally formed on its outer circumference with a body mounting flange adapted to be mounted on a knuckle of a suspension apparatus and on its inner circumference with double row outer raceway surfaces; an inner member including a hub wheel and at least one inner rings, the hub wheel being integrally formed on its one end with a wheel mounting flange and with a cylindrical portion axially extending from the wheel mounting flange, the inner rings being press-fitted onto the cylindrical portion of the hub wheel via a predetermined interference and formed on their outer circumferences with inner raceway surfaces corresponding to the outer raceway surfaces of the outer member; and double row rolling elements freely rollably contained between the inner and outer raceway surfaces of the inner and outer members via cages, wherein a hardened ring-shaped gear member is mounted on an end of the cylindrical portion of the hub wheel, the gear member being formed on its outer circumference with a gear portion and on its inner circumference with a splined portion engaging a hub-splined portion formed on the outer circumference of the cylindrical portion of the hub wheel; wherein both a contacting surface of the gear member and a contacting surface of the inner ring being abutted against each other are ground; and wherein the inner rings are axially immovably secured under a condition in which a predetermined amount of a bearing pre-stress is applied to the inner rings via the gear member characterized in that the surface roughness of the contacting surface of the gear member contacted against the inner ring is set to 1.6 or less (Ra≦1.6), in that an external thread is formed on the end of the cylindrical portion of the hub wheel, and in that a securing nut is fastened on the external thread to secure the inner rings.

In the wheel bearing apparatus of the second or third generation structure in which the gear member for selectively switching the 4-wheel driving mode or 2-wheel driving mode is secured on the inner member comprising the hub wheel and the inner ring(s) of claim 1 of the present invention. A hardened ring-shaped gear member is mounted on an end of the cylindrical portion of the hub wheel, and the gear member is formed, on its outer circumference, with a gear portion and, on its inner circumference, with a splined portion which engases a hub-splined portion formed on the outer circumference of the cylindrical portion of the hub wheel. Both a contacting surface of the gear member and a contacting surface of the inner ring are abutted against each other are ground. The inner rings are axially immovably secured under a condition in which a predetermined amount of a bearing pre-stress is applied to the inner rings via the gear member. This arrangement makes it possible to provide a wheel bearing apparatus which can attain close contact and accordingly large frictional resistance between the contacting surfaces of the inner ring and the gear member and thus reduce the torque applied to the hub-splined portion and finally improve the durability of the wheel bearing apparatus. More particularly, since the contacting surfaces of the inner ring and the gear member are ground and the frictional resistance of the contacting surfaces can be increased due to close contact of them, it is possible to transmit the torque via the closely contacted surfaces of the inner ring and the gear member and thus to reduce the torque applied to the hub-splined portion.

It is preferable that the surface roughness Ra of the contacting surface of the gear member contacted against the inner ring is set to 1.6 or less (Ra≦1.6). This makes it possible to surely have close contact of the contacting surfaces of the inner ring and the gear member and frictional resistance between them.

It is also possible that the inner rings are secured by a caulked portion formed by plastically deforming the end of the cylindrical portion of the hub wheel, and that the caulked portion is kept as a non-hardened portion having the surface hardness after forging. This makes it possible to generate difference in the hardness between the gear member and the caulked portion and thus to prevent generation of problems such as generation of micro-cracks in the caulked portion. In addition, it is possible to keep the initially set bearing pre-pressure for a long term with preventing generation of deformation or micro-cracks due to generation of excessive stress in the gear member.

It is also preferable that an external thread is formed on the end of the cylindrical portion of the hub wheel, and that a securing nut is fastened on the external thread to secure the inner rings.

It is preferable as defined in claim 2 that the contacting width between the gear member and the caulked potion or the securing nut is set to 1 mm or more (≧ 1 mm). This makes it possible to assure a desired axial force by pressing the inner ring and thus to prevent the bearing pre-pressure from being dissipated when any external force is applied to the wheel bearing apparatus.

It is also preferable as defined in claim 3 that the gear member is formed of steel including carbon of 0.15-0.45% by weight (wt%) and hardened to its core by dipping quenching, and that the surface hardness of the gear member is set to 40 HRC or more. This makes it possible to have the gear portion having moderate hardness and to assure a desirable strength of the gear member not only in its gear portion but in its whole body.

It is preferable as defined in claim 4 that the gear member is formed of chrome molybdenum steel including Mo of 0.15-0.3% by weight (wt%), that a hardened layer is formed on the surface of the gear member by carburizing quenching, and that the surface hardness of the hardened layer is set to 40 HRC or more. This makes it possible to suppress brittleness of the gear member and thus to prevent generation of micro-cracks during caulking process and to assure the strength when the driving force is applied to the gear member.

It is also preferable as defined in claim 5 that a hardened layer having the surface hardness of 50-64 HRC is formed on part of the hub-splined portion by high frequency induction hardening. This makes it possible to suppress wear of the hub-splined portion and to increase allowable torque and thus to improve the durability of the wheel bearing apparatus.

### Effects of the Invention

According to the wheel bearing apparatus of the present invention, since it comprises an outer member integrally formed on its outer circumference with a body mounting flange adapted to be mounted on a knuckle of a suspension apparatus and on its inner circumference with double row outer raceway surfaces; an inner member including a hub wheel and at least one inner rings, the hub wheel being integrally formed on its one end with a wheel mounting flange and with a cylindrical portion axially extending from the wheel mounting flange, the inner rings being press-fitted onto the cylindrical portion of the hub wheel via a predetermined interference and formed on their outer circumferences with inner raceway surfaces corresponding to the outer raceway surfaces of the outer member; and double row rolling elements freely rollably contained between the inner and outer raceway surfaces of the inner and outer members via cages and is characterized in that a hardened ring-shaped gear member is mounted on an end of the cylindrical portion of the hub wheel, the gear member being formed on its outer circumference with a gear portion and on its inner circumference with a splined portion engaging a hub-splined portion formed on the outer circumference of the cylindrical portion of the hub wheel; that both a contacting surface of the gear member and a contacting surface of the inner ring being abutted against each other are ground; and that the inner rings are axially immovably secured under a condition in which a predetermined amount of a bearing pre-stress is applied to the inner rings via the gear member, it is possible to provide a wheel bearing apparatus which can attain close contact and accordingly large frictional resistance between the contacting surfaces of the inner ring and the gear member and thus reduce the torque applied to the hub-splined portion and finally improve the durability of the wheel bearing apparatus. More particularly, since the contacting surfaces of the inner ring and the gear member are ground and the frictional resistance of the contacting surfaces can be increased due to close contact of them, it is possible to transmit the torque via the closely contacted surfaces of the inner ring and the gear member and thus to reduce the torque applied to the hub-splined portion.

### Brief description of the Drawings

[Fig. 1] A longitudinal section view showing a first embodiment of the wheel bearing apparatus of the present invention;
[Fig. 2] (a) A partially enlarged view showing a bearing portion of Fig. 1, and (b) a partially enlarged view showing a seal of Fig. 1;
[Fig. 3] A partially enlarged view showing a modification of the embodiment of Fig.1;
[Fig. 4] Explanatory views showing methods for controlling the axial force of the wheel bearing apparatus of the present invention in which (a) shows a condition before caulking, and (b) shows a condition after caulking;
[Fig. 5] A longitudinal section view showing a second embodiment of the wheel bearing apparatus of the present invention;
[Fig. 6] A longitudinal section view showing a wheel bearing apparatus of the prior art; and
[Fig. 7] A partially enlarged view of Fig. 6.

One preferable mode for carrying out the present invention is a wheel bearing apparatus comprising an outer member integrally formed on its outer circumference with a body mounting flange adapted to be mounted on a knuckle of a suspension apparatus and on its inner circumference with double row outer raceway surfaces; an inner member including a hub wheel and at least one inner rings, the hub wheel being integrally formed on its one end with a wheel mounting flange and with a cylindrical portion axially extending from the wheel mounting flange, the inner rings formed on their outer circumferences with inner raceway surfaces corresponding to the outer raceway surfaces of the outer member being press-fitted onto the cylindrical portion of the hub wheel via a predetermined interference and axially secured by a caulked portion formed by plastically deforming the end of the cylindrical portion of the hub wheel; and double row rolling elements freely rollably contained between the inner and outer raceway surfaces of the inner and outer members via cages characterized in that a hardened ring-shaped gear member is mounted on an end of the cylindrical portion of the hub wheel, the gear member being formed on its outer circumference with a gear portion and on its inner circumference with a splined portion engaging a hub-splined portion formed on the outer circumference of the cylindrical portion of the hub wheel; that the surface roughness Ra of the contacting surface of the gear member contacted against the inner ring is set to 1.6 or less (Ra≦1.6), and that the inner rings are axially immovably secured by the caulked portion under a condition in which a predetermined amount of a bearing pre-stress is applied to the inner rings via the gear member.

### First Embodiment

Preferable embodiments of the present invention will be hereinafter described with reference to the drawings.

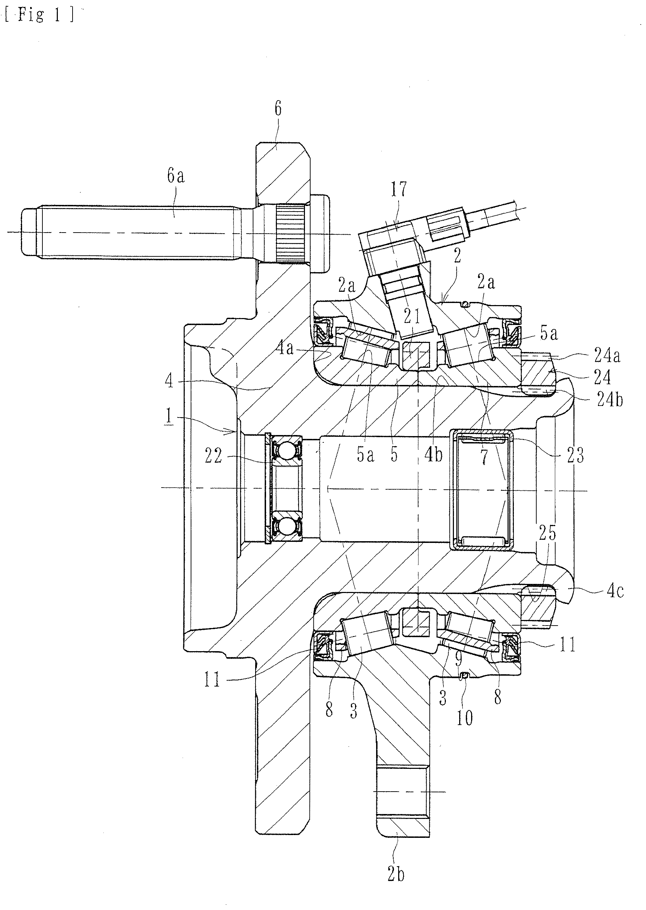

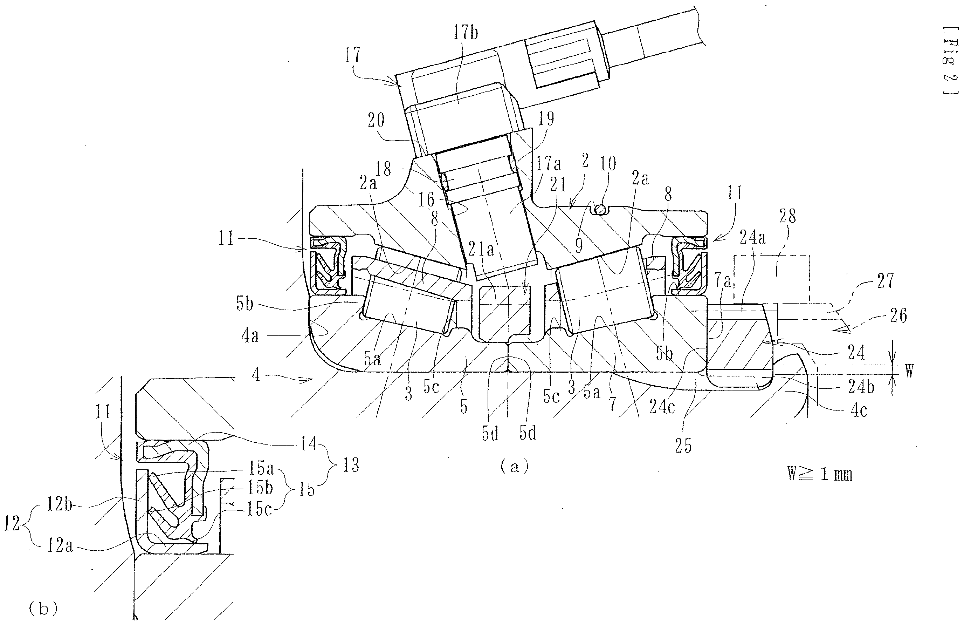

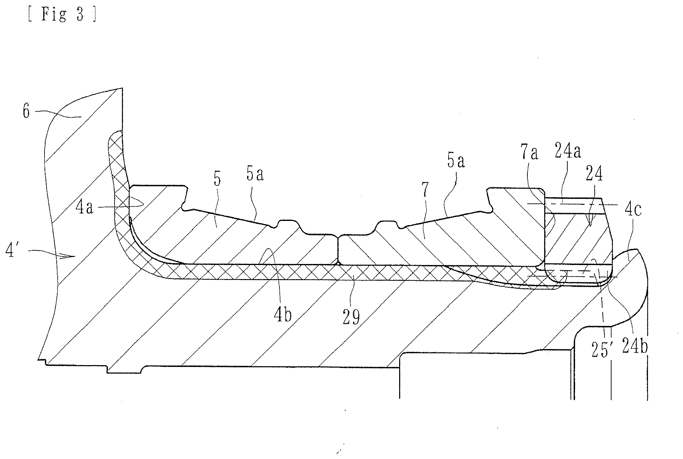

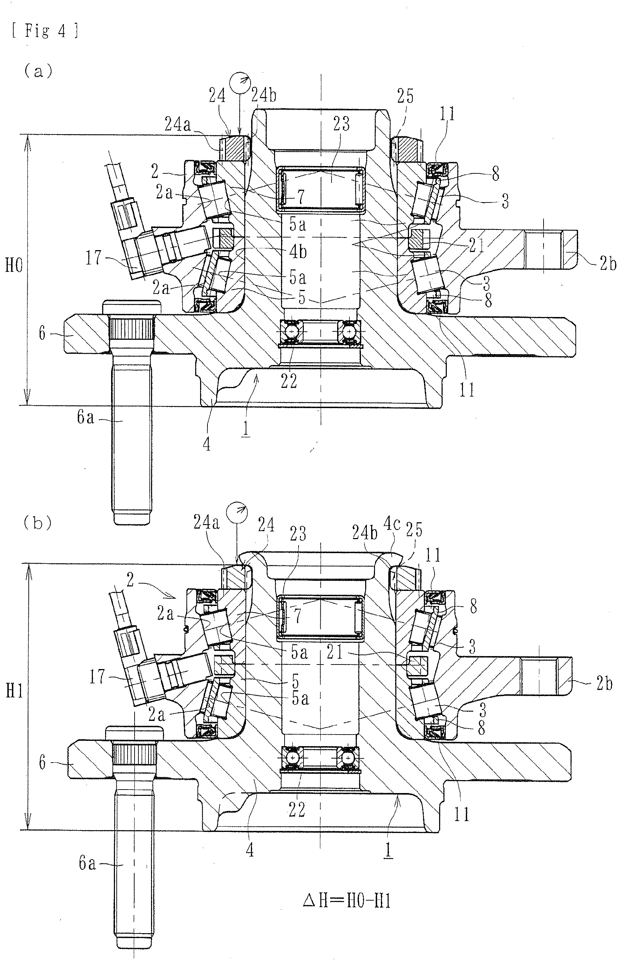

Fig. 1 is a longitudinal section view showing a first embodiment of the wheel bearing apparatus of the present invention, Fig. 2(a) is an partially enlarged view showing a bearing portion of Fig. 1, Fig. 2(b) is an partially enlarged view showing a seal of Fig. 1, Fig. 3 is a partially enlarged view showing a modification of the embodiment of Fig.1, and Fig. 4 is an explanatory views showing methods for controlling the axial force of the wheel bearing apparatus of the present invention in which Fig. 4(a) shows a condition before caulking and Fig. 4(b) shows a condition after caulking. In the description of the present invention, an outer-side of the wheel bearing apparatus when it is mounted on a vehicle is referred to as "outer-side" (left-side in drawings), and an inner-side of a bearing apparatus when it is mounted on a vehicle is referred to as "inner-side" (right-side in figures)

The wheel bearing apparatus of this embodiment is used for a driving wheel and comprises an inner member 1, an outer member 2, and double row rolling elements (tapered rollers) 3, 3 rollably contained between the inner and outer members 1, 2. The inner member 1 comprises a hub wheel 4 and a pair of inner rings 5, 7 secured on the hub wheel 4 via plastic deformation of the hub wheel 4.

The hub wheel 4 is integrally formed on its outer-side end with a wheel mounting flange 6 for mounting a wheel (not shown) and a cylindrical portion 4b extending axially from the wheel mounting flange 6 via a shoulder portion 4a. Hub bolts 6a are also arranged on the wheel mounting flange 6 equidistantly along its periphery.

Each of the pair of inner rings 5, 7 is formed on its outer circumference with a tapered inner raceway surface 5a and press-fitted onto the cylindrical portion 4b of the hub wheel 4. As shown in the enlarged view of Fig. 2(a), larger ribs 5b, 5b are formed on larger diameter sides of the inner raceway surfaces 5a, 5a for guiding the rolling elements 3, 3 and smaller ribs 5c, 5c are formed on smaller diameter sides of the inner raceway surfaces 5a, 5a for preventing falling-off of the rolling elements 3, 3. Both the inner rings 5, 7 are mounted on the cylindrical portion 4b of the hub wheel 4 with the smaller-side end faces being abutted each other and form a double row tapered roller bearing of the back-to-back duplex bearing. The pair of inner rings 5, 7 is basically same with each other except that the chamfered portion of the larger diameter-side of the outer-side inner ring 5 has a larger diameter than that of the larger diameter-side of the inner-side inner ring 7.

As shown in Fig. 1, the outer member 2 is integrally formed on its outer circumference with a body mounting flange 2b to be mounted on a knuckle (not shown) and on its inner circumference with outwardly tapered double row outer raceway surfaces 2a, 2a. The double row tapered rollers 3, 3 are freely rollably contained between the inner and outer raceway surfaces of the inner and outer members 1 and 2 via cages via cages 8. Sealing between the knuckle and the outer member 2 can be attained by an elastic ring 10 such as an O-ring fitted in an annular groove 9 formed on the outer circumference of the outer member 2.

The hub wheel 4 is made of medium/high carbon steel (JIS SC-carbon steel for machine structural use) including carbon of 0.40∼0.80% by weight such as S53C and hardened by high frequency induction hardening so that a region from the shoulder portion 4a to the cylindrical portion 4b has surface hardness of 58∼64 HRC. The inner rings 5, 7 and rolling elements 3 is formed of high carbon chrome steel such as SUJ2 and hardened to their core by dipping quenching as having a hardness of 58∼64 HRC. The caulking portion 4c described later is remained in no-hardened condition as having surface hardness after forging. This makes the caulking operation easy and prevents generation of micro-cracks during caulking operation and increases the durability of the hub wheel 4 with providing sufficient mechanical strength against the rotary bending load applied to the wheel mounting flange 6.

Similarly to the hub wheel 4, the outer member 2 is made of medium/high carbon steel including carbon of 0.40∼0.80% by weight such as S53C and hardened by high frequency induction hardening so that at least the double row outer raceway surfaces 2a, 2a have surface hardness of 58∼64 HRC. Seals 11, 11 are mounted within annular openings formed between the outer member 2 and inner rings 5, 7 to prevent leakage of grease contained in the bearing and entering of rain water and dusts into the bearing from outside.

As shown in a partially enlarged view of Fig. 2(b), the seal 11 comprises a slinger 12 and an annular sealing plate 13 and is formed as a so-called "pack seal". The slinger 12 is press-formed of a ferromagnetic steel plate such as a ferritic stainless steel sheet (JIS SUS 430 etc.) or preserved cold rolled steel sheet (JIS SPCC etc.) as having a substantially L-shaped longitudinal section and comprises a cylindrical portion 12a to be press-fitted into the larger rib portions 5b of the inner rings 5, 7 and a standing portion 12b extending radially outward from the cylindrical portion 12a.

On the other hand, the sealing plate 13 comprises a core metal 14 to be fitted into the end of the outer member 2 and a sealing member 15 integrally adhered to the core metal 14 via vulcanized adhesion. The core metal 14 is press-formed of austenitic stainless steel sheet or preserved cold rolled steel sheet as having a substantially L-shaped longitudinal section.

Sealing member 15 is formed of synthetic rubber such as NBR (acrylonitrile-butadiene rubber) etc. and integrally formed with a pair of side lips 15a, 15b angularly extending radially outward and a grease lip 15c angularly extending toward inside of the bearing. The side lips 15a, 15b are slide-contacted with inner-side surface of the standing portion 12b of the slinger 12 via a predetermined axial interface and the grease lip 15c is slide-contacted with the cylindrical portion 12a of the slinger 12 via a predetermined radial interference. There are, other than NBR, examples of material of the sealing member 15 such as HNBR (hydrogenation acrylonitric-butadien rubber), EPDM (ethylene propylene rubber), ACM poly-acrylic rubber) superior in heat and chemical resistance, FKM (fluororubber) or silicone rubber.

In this embodiment, a rotational speed sensor 17 is inserted into a sensor insertion aperture 16 extending radially between the outer raceway surfaces 2a and 2a of the outer member 2. The rotational speed sensor 17 is embedded in synthetic resin and comprises an IC circuit incorporated with a Hall element, magnetic resistance element (MR element), and a waveform shaping circuit for shaping the output waveform of the magnetic detecting element. The rotational speed sensor 17 comprises an insertion portion 17a to be inserted into the insertion aperture 16, and non-insertion portion 17b positioned outside of the outer member 2. An annular groove 18 is formed on the outer circumference of the insertion portion 17a and an elastic ring 19 such as O-ring etc. is fitted therein. The non-insertion portion 17b is configured so that it sits on the sensor mounting portion 20 of the outer member 2 and fastened thereto via a mounting piece (not shown) extending laterally.

On the other hand, a pulsar ring 21 is secured on the outer circumference of the smaller rib 5c of the outer-side inner ring 5 with being opposed to the rotational speed sensor 17 via a predetermined radial gap (air gap). This pulsar ring 21 is formed like a gear having teeth 21a. Accordingly, it is possible to detect the rotational speed of a wheel via the rotational speed sensor 17 based on alternative variation in magnetic fields due to rotation of the hub wheel 4.

Rigid fixation of the inner rings 5, 7 to the cylindrical portion 4b of the hub wheel 4 is performed by press-fitting the inner rings 5, 7 onto the cylindrical portion 4b of the hub wheel 4 via a predetermined interference and then by forming the caulked portion 4c with plastically deforming the end portion of the cylindrical portion 4b radially outward (see Fig. 1).

Although it is shown herein the double row tapered roller bearing, the present invention may be applied to a double row angular contact ball bearing using balls as rolling elements.

As shown in Fig. 1, a shaft portion of an outer joint member forming a constant velocity universal joint (not shown) is adapted to be rotationally supported in the hub wheel 4 via rolling bearings 22, 23. The outer-side rolling bearing 22 is a deep groove ball bearing and the inner-side rolling bearing 23 is a shell type needle roller bearing.

As shown in Fig. 2(a), the inner ring 7 is axially secured on the hub wheel 4 by the caulked portion 4c via a ring-shaped gear member 24.The gear member 24 is formed on its outer circumference with gear portion 24a and on its inner circumference with splined portion 24b which is adapted to be engaged with a hub-splined portion 25 formed on the outer circumference of the cylindrical portion 4b of the inner-side end of the hub wheel 4. The gear member 24 is pressed onto the inner ring 7 by a caulking pressure from the caulked portion 4c acting on the inner-side end face of the gear member 24. Thus, fixation of the gear member 24 and the pair of inner ring 5, 7 relative to the hub wheel 4 can be surely attained by the caulking pressure applied by the caulked portion 4c.

The gear portion 24a of the gear member 24 can be selectively engaged with a ring-shaped slide gear 28 engaging a gear portion 27 of the outer joint member 26 by selectively sliding the slide gear 28. Under a condition in which the gear member 24 and the gear portion 27 are engaged with each other via the slide gear 28, the driving force can be transmitted from the constant velocity universal joint to a wheel via both the inner ring 7 and the hub wheel 4. That is, the wheel supported by the hub wheel 4 in this case functions as a driving wheel. On the contrary, under a condition in which the gear member 24 and the gear portion 27 are not engaged with each other, the driving force cannot be transmitted to a wheel. In this case the wheel supported by the hub wheel 4 functions as a driven wheel and thus the switching between a 4-wheel driving and 2-wheel driving can be selectively performed.

According to the present invention, the gear member 24 is formed of steel including carbon of 0.15∼0.45% by weight (wt%), preferably 0.38∼0.43% by weight (wt%) and hardened to its core by dipping quenching as having 40∼55 HRC (392∼600 HV).

Since the gear member 24 has an amount of Cr content of about 0.09∼0.12% by weight which is higher than that of the Hub wheel 4 formed of medium/high carbon steel such as S53C etc, the gear member 24 has higher tenacity. When a gear member 24 including carbon amount corresponding to high carbon steel is dipping quenched, its hardness will be HRC 60 (700 HV). However, since the gear member 24 is formed of steel including carbon amount lesser than that of medium/high carbon and hardened by dipping quenching, it is possible to have a gear member 24 having a gear portion of moderate hardness. That is, the gear member 24 has hardness higher by substantially 132∼340 HV than hardness 260 HV of the caulked portion 4c and accordingly desirable strength can be assured wholly of the gear member 24 other than the gear portion 24a and the splined portion 24b. Thus it is possible to prevent generation of excessive stress in the gear member 24 and accordingly generation of deformations or micro- cracks during caulking process. In addition, it is possible to plastically deform the end of the cylindrical portion 4b of the hub wheel 4 radially outward to form the caulked portion 4c without causing generation of micro-cracks therein and thus to keep the initially set bearing pre-pressure for a long term.

The gear member 24 is formed of chrome molybdenum steel such as SCM 440 or SCM 430 including Mo of 0.15∼0.3% by weight (wt%), and a hardened layer is formed on the surface of the gear member 24 by carburizing quenching, and the surface hardness of the hardened layer is set to 40∼55 HRC or more. This makes it possible to suppress brittleness of the gear member 24 and thus to prevent generation of micro-cracks during caulking process and to assure the strength when the driving force is applied to the gear member 24.

According to the present invention, the surface roughness of the larger end face 7a of the inner ring 7 is set to Ra 0.63 or less by grinding after heat treatment and the surface roughness of the contact surface 24c of the gear member 24 abutted against the larger end face 7a of the inner ring 7 is set to Ra 1.6 or less (Ra≦1.6), preferably Ra 0.63 or less (Ra≦0.63). This makes it possible to surely have close contact of the contacting surfaces 7a, 24a of the inner ring 7 and the gear member 24 and frictional resistance between them and thus to provide a wheel bearing apparatus which can reduce a torque to be loaded on the hub-spline portion 25 and thus can improve the durability. "Ra" is one of roughness shape parameters in JIS (JIS B0601-1994) and defined as an average value of absolute deviations from an average line (arithmetical average roughness).

Furthermore, a contacting width W between the gear member 24 and the caulked potion 4c is set to 1 mm or more (≧1 mm). This makes it possible to assure a desired axial force by pressing the inner ring 7. That is, it is usually necessary to prevent the bearing pre-pressure from being dissipated when any external force is applied to the wheel bearing apparatus relative to the maximum axial force 20 kN inputted to the wheel bearing apparatus during running of a vehicle. In a test of caulking carried out by an applicant, it is found from measurement of axial force obtained by varying amount of caulking that the contacting width W of at least 1mm between the gear member 24 and the caulked potion 4c is necessary for assuring the lower limit value 20 kN of the axial force.

Fig. 3 shows a modification of the first embodiment of Fig. 1. In this modification, a hardened layer 29 (shown by cross-hatchings) having the surface hardness of 50∼64 HRC is formed on part of the hub-splined portion 25' by high frequency induction hardening and the splined portion 24b of the gear member 24 is engaged with the hub-splined portion 25'. This makes it possible to suppress wear of the hub-splined portion 25' and to increase allowable torque and thus to improve the durability of the wheel bearing apparatus.

Then, a controlling method of an axial force (bearing clearance) of the wheel bearing apparatus of the present invention will be described with reference to Fig. 4. The inner ring 7 and the gear member 24 are elastically deformed by caulking and the elastic deformation will reduce the bearing clearance. Since there is a relative relation between an amount of the elastic deformation and an amount of the clearance reduction, a regression formula can be prepared by performing a test the amount of the elastic deformation and the amount of the clearance reduction relating to bearings having similar specifications.

Then the bearing clearance before caulking and a height H0 of the gear member before caulking is measured. That is, as shown in Fig. 4(a), the height H0 of the gear member 24 from the outer-side end of the hub wheel 4 is measured under a condition in which the gear member is inserted onto the cylindrical end before caulking of the cylindrical portion 4b with a the splined portion 24b of the gear member 24 being engaged with the hub-splined portion 25 and the outer-side end face of the gear member 24 being closely contacted with the larger end face 7a of the inner ring 7. Then as shown in Fig. 4(b), a height H1 of the gear member 24 after caulking is measured. The amount of clearance reduction can be calculated according to the previously confirmed regression formula from the amount of height variation (amount of elastic variation) ΔH =H0-H1. Finally, the bearing clearance after caulking can be calculated by subtracting the amount of clearance reduction from the bearing clearance before caulking.

Since the bearing clearance according to the pre-pressure after caulking is set to a negative clearance, direct measurement is impossible. The amount of pre-pressure can be indirectly controlled from the amounts of elastic deformation of the inner ring 7 and the gear member 24 by measuring the heights of the gear member 24 before and after caulking of the gear member 24. In the present invention, since the gear member 24 is hard to be plastically deformed by caulking, it is possible to exactly measure the amount of elastic deformation and thus to perform the exact and stable pre-pressure control with suppressing variance of measurements.

### Second Embodiment

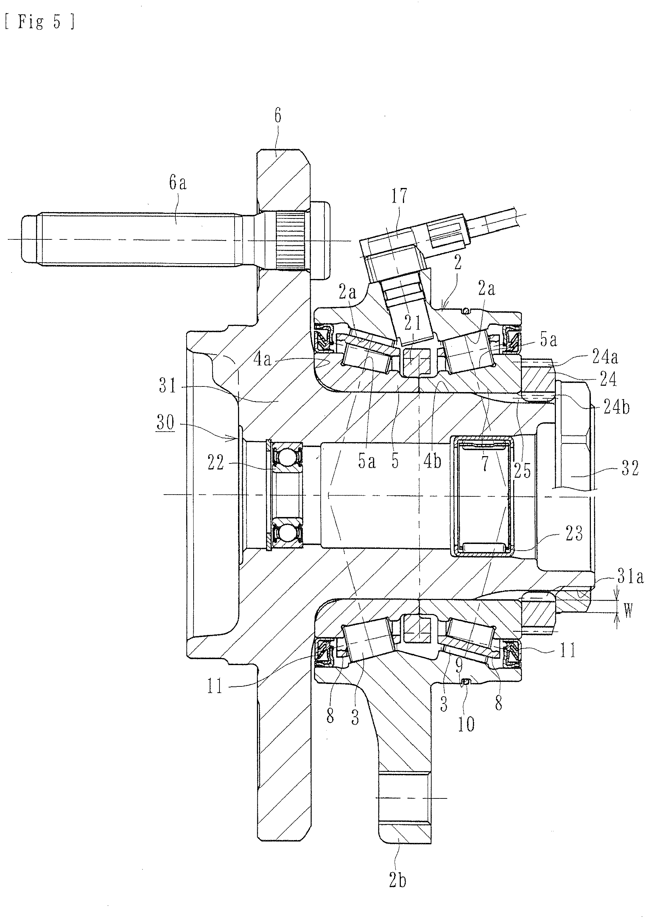

Fig. 5 is a longitudinal section view showing a second embodiment of the wheel bearing apparatus of the present invention. Since this embodiment is basically different only in means for applying the axial force to the inner rings, same reference numerals as those used in the previous embodiment are also used to parts or portions having same functions in this embodiment.

The wheel bearing apparatus of this embodiment comprises an inner member 30, an outer member 2, and double row rolling elements 3, 3 rollably contained between the inner and outer members 30, 2. The inner member 30 comprises a hub wheel 31 and a pair of inner rings 5, 7 secured on the hub wheel 31 via plastic deformation of the hub wheel 31.

The hub wheel 31 is integrally formed on its outer-side end with a wheel mounting flange 6 and a cylindrical portion 4b extending axially from the wheel mounting flange 6 via a shoulder portion 4a. An external thread 31a is formed on the end of the cylindrical portion 4b of the hub wheel 31, and a securing nut 32 is fastened on the external thread 31a to secure the pair of inner rings 5, 7.

According to this embodiment, the contacting width W between the gear member 24 and the securing nut 32 is set to 1 mm or more. This makes it possible to assure a desired axial force by pressing the inner ring 7 via the gear member 24 by fastening the securing nut 32.

The present invention has been described with reference to the preferred embodiments and modifications. Obviously, other modifications and modifications will occur to those of ordinary skill in the art upon reading and understanding the preceding detailed description. It is intended that the present invention be construed as including all such alternations and modifications insofar as they come within the scope of the appended claims.

### [Applicability in Industries]

The wheel bearing apparatus of the present invention can be applied to the wheel bearing apparatus of the second and third generation types in which the gear member for switching 4-wheel drive and 2-wheel drive is secured on an inner member comprising a hub wheel and an inner ring fitted on the hub wheel.

### Explanation of Reference numerals

- 1, 30: inner member
- 2: outer member
- 2a: outer raceway surface
- 2b: body mounting flange
- 3: rolling element
- 4, 4', 31: hub wheel
- 4a: shoulder portion
- 4b: cylindrical portion
- 4c: caulked portion
- 5, 7: inner ring
- 5a: inner raceway surface
- 5b: larger rib portion
- 5c: smaller rib portion
- 5d: smaller end face
- 6: wheel mounting flange
- 6a: hub bolt
- 7a: larger end face of inner ring
- 8: cage
- 9, 18: annular groove
- 10, 19: elastic member
- 11: seal
- 12: slinger
- 12a: cylindrical portion
- 12b: standing portion
- 13: sealing plate
- 14: core member
- 15: sealing member
- 15a, 15b: side lip
- 15c: grease lip
- 16: sensor insertion aperture
- 17: rotational speed sensor
- 17a: insertion portion
- 17b: non-insertion portion
- 20: sensor mounting portion
- 21: pulsar ring
- 21a: teeth
- 22, 23: rolling bearing
- 24: gear member
- 24a: gear portion
- 24b: splined portion
- 25, 25': hub-spline
- 26: outer joint member
- 27: gear portion of outer joint member
- 28: slide gear
- 29: hardened layer
- 31a: external thread
- 32: securing nut
- 50: wheel bearing apparatus
- 51: axle
- 52: hub shaft
- 53: double row tapered roller bearing
- 54: gear member
- 55: deep groove ball bearing
- 56: needle roller bearing
- 57: cylindrical portion
- 58: flange portion
- 58a: through aperture
- 59: caulked portion
- 60: splined portion
- 60a: spline recess of hub shaft
- 60b: spline projection of hub shaft
- 60c: terminal point of spline recess of hub shaft
- 61: inner circumferential splined portion
- 61a: spline recess
- 61b: spline projection
- 62: inner ring
- 63: outer ring
- 63a: first outer raceway surface of outer ring
- 63b: second outer raceway surface of outer ring
- 63c: flange portion
- 64, 65: tapered roller
- 66: first inner ring
- 66a: first inner raceway surface of inner ring
- 66b: end face of first inner ring
- 67: second inner ring
- 67a: second raceway surface of inner ring
- 67b: end face of second inner ring
- 68: sealing member
- 69: outer circumferential splined portion
- 69a: spline recess of gear member
- 69b: spline projection of gear member
- 70: inner-side chamfered portion
- 71: side surface of coupler ring
- 71a: one end of inner-side chamfered portion
- L: distance from side surface of gear member to one end of inner-side chamfered portion
- G: slide gear
- G1: splined portion
- ΔH: amount of variation in height of gear member
- H0: height of gear member before caulking
- H1: height of gear member after caulking
- W: contacting width between gear member and caulked portion or nut
- X: distance from side surface of gear member to terminal point of spline recess of hub shaft

## Claims

1. A wheel bearing apparatus comprising:
an outer member (2) integrally formed on its outer circumference with a body mounting flange (2b) adapted to be mounted on a knuckle of a suspension apparatus and on its inner circumference with double row outer raceway surfaces (2a, 2a);
an inner member (1) including a hub wheel (4, 4', 31) and at least one inner rings (5, 7), the hub wheel (4, 4', 31) being integrally formed on its one end with a wheel mounting flange (6) and with a cylindrical portion (4b) axially extending from the wheel mounting flange (6), the inner rings (5, 7) being press-fitted onto the cylindrical portion (4b) of the hub wheel (4, 4', 31) via a predetermined interference and formed on their outer circumferences with inner raceway surfaces (5a, 5a) corresponding to the outer raceway surfaces (2a, 2a) of the outer member (2); and
double row rolling elements (3, 3) freely rollably contained between the inner and outer raceway surfaces (5a, 5a; 2a, 2a) of the inner and outer members (1, 2) via cages (8, 8)
wherein a hardened ring-shaped gear member (24) is mounted on an end of the cylindrical portion (4b) of the hub wheel (4, 4', 31), the gear member (24) being formed on its outer circumference with a gear portion (24a) and on its inner circumference with a splined portion (24b) engaging a hub-splined portion (25, 25') formed on the outer circumference of the cylindrical portion (4b) of the hub wheel (4,4', 31);
wherein both a contacting surface (24c) of the gear member (24) and a contacting surface of the inner ring (7) being abutted against each other are ground; and
wherein the inner rings (5, 7) are axially immovably secured under a condition in which a predetermined amount of a bearing pre-stress is applied to the inner rings (5, 7) via the gear member (24)
**characterized in that**
the surface roughness (Ra) of the contacting surface (24c) of the gear member (24) contacted against the inner ring (7) is set to 1.6 or less (Ra≦1.6), **in that** an external thread (31a) is formed on the end of the cylindrical portion (4b) of the hub wheel (31), and **in that** a securing nut (32) is fastened on the external thread (31a) to secure the inner rings (5, 7).

2. A wheel bearing apparatus of claim 1 wherein a contacting width (W) between the gear member (24) and the caulked potion (4c) or the securing nut (32) is set to 1 mm or more.

3. A wheel bearing apparatus of claim 1 wherein the gear member (24) is formed of steel including carbon of 0.15-0.45% by weight (wt%) and hardened to its core by dipping quenching, and wherein the surface hardness of the gear member (24) is set to 40 HRC or more.

4. A wheel bearing apparatus of claim 1 wherein the gear member (24) is formed of chrome molybdenum steel including Mo of 0.15-0.3% by weight (wt%), wherein a hardened layer is formed on the surface of the gear member (24) by carburizing quenching, and wherein the surface hardness of the hardened layer is set to 40 HRC or more.

5. A wheel bearing apparatus of claim 1 wherein a hardened layer (29) having the surface hardness of 50-64 HRC is formed on part of the hub-splined portion (25') by high frequency induction hardening.

## Patentansprüche

1. Radlagervorrichtung, Folgendes umfassend:
ein äußeres Bauteil (2), angeformt an seinem äußeren Umfang mit einem Körperbefestigungsflansch (2b), der geeignet ist, auf einem Achsschenkel einer Aufhängungsvorrichtung montiert zu werden, und an seinem inneren Umfang mit einer Doppelreihe von äußeren Laufbahnflächen (2a, 2a);
ein inneres Bauteil (1), einschließlich einer Radnabe (4, 4', 31) und wenigstens einem Innenring (5, 7), wobei die Radnabe (4, 4', 31) an ihrem einen Ende mit einem Radmontageflansch (6) und mit einem zylindrischen Abschnitt (4b), der sich axial vom Radmontageflansch (6) erstreckt, angeformt ist, wobei die Innenringe (5, 7) mit einem Pressanschluss auf den zylindrischen Abschnitt (4b) der Radnabe (4, 4', 31) über einen vorab festgelegten Eingriff eingepasst sind und auf ihrem äußeren Umfang mit inneren Laufbahnflächen (5a, 5a) geformt sind, die den äußeren Laufbahnflächen (2a, 2a) des äußeren Bauteils (2) entsprechen; und
doppelreihige Wälzkörper (3, 3), die zwischen den inneren und äußeren Laufbahnflächen (5a, 5a; 2a, 2a) des inneren und äußeren Bauteils (1, 2) in Käfigen (8, 8) frei rollbar enthalten sind,
wobei ein gehärtetes, ringförmiges Getriebeteil (24) an einem Ende des zylindrischen Abschnitts (4b) der Radnabe (4, 4', 31) montiert ist, wobei das Getriebeteil (24) auf seinem äußeren Umfang mit einem Getriebeabschnitt (24a) und auf seinem inneren Umfang mit einem längsgenuteten Abschnitt (24b) geformt ist, und ein nabengenuteter Abschnitt (25, 25'), der auf dem äußeren Umfang des zylindrischen Abschnitts (4b) der Radnabe (4, 4', 31) geformt ist, eingreift;
wobei sowohl eine Kontaktfläche (24c) des Getriebeteils (24) als auch eine Kontaktfläche des Innenrings (7), die aneinanderstoßen, geschliffen sind; und
wobei die Innenringe (5, 7) axial unbeweglich gesichert sind, und zwar unter einer Bedingung, dass die Innenringe (5, 7) über das Getriebeteil (24) einer vorgegebenen Vorspannung ausgesetzt sind,
**dadurch gekennzeichnet, dass**
die Oberflächenrauheit (Ra) der Kontaktfläche (24c) des Getriebeteils (24), die mit dem Innenring (7) in Kontakt kommt, auf 1,6 oder weniger (Ra ≦ 1.6) eingestellt ist, dass ein Außengewinde (31a) am Ende des zylindrischen Abschnitts (4b) der Radnabe (31) gebildet ist und dass eine Sicherungsmutter (32) am Außengewinde (31a) befestigt ist, um die Innenringe (5, 7) zu sichern.

2. Radlagervorrichtung gemäß Anspruch 1, wobei eine Kontaktbreite (W) zwischen dem Getriebeteil (24) und dem gekröpften Abschnitt (4c) oder der Sicherungsmutter (32) auf 1 mm oder mehr eingestellt ist.

3. Radlagervorrichtung gemäß Anspruch 1, wobei das Getriebeteil (24) aus Stahl mit 0,15 - 0,45 Gewichtsprozent (Gew.-%) Kohlenstoff gebildet und durch Tauchabschrecken durchgehärtet ist und wobei die Oberflächenhärte des Getriebeteils (24) auf 40 HRC oder höher eingestellt ist.

4. Radlagervorrichtung gemäß Anspruch 1, wobei das Getriebeteil (24) aus Chrom-Molybdän-Stahl mit 0,15 - 0,3 Gewichtsprozent (Gew.-%) Mo gebildet ist, wobei eine gehärtete Schicht auf der Oberfläche des Getriebeteils (24) durch Einsatzhärten durch Abschrecken gebildet ist und wobei die Oberflächenhärte der gehärteten Schicht auf 40 HRC oder höher eingestellt ist.

5. Radlagervorrichtung gemäß Anspruch 1, wobei eine gehärtete Schicht (29) mit einer Oberflächenhärte von 50 - 64 HRC auf einem Teil des nabengenuteten Abschnitts (25') durch hochfrequentes Induktionshärten gebildet ist.

## Revendications

1. Appareil de roulement de roue comportant :
un élément extérieur (2) formé intégralement sur sa circonférence extérieure avec une bride de montage de corps (2b) conçue pour être montée sur un joint d'un appareil de suspension et sur sa circonférence intérieure avec des surfaces de chemin de roulement extérieures à deux rangées (2a, 2a) ;
un élément intérieur (1) comprenant une roue de moyeu (4, 4', 31) et au moins une bague intérieure (5, 7), la roue de moyeu (4, 4', 31) étant formée intégralement sur sa première extrémité avec une bride de montage de roue (6) et avec une partie cylindrique (4b) s'étendant axialement depuis la bride de montage de roue (6), les bagues intérieures (5, 7) étant emmanchées par pression sur la partie cylindrique (4b) de la roue de moyeu (4, 4', 31) par l'intermédiaire d'une interférence prédéterminée et formée sur leurs circonférences extérieures avec des surfaces de chemin de roulement intérieures (5a, 5a) correspondant aux surfaces de chemin de roulement extérieures (2a, 2a) de l'élément extérieur (2) ; et
des éléments de roulement à deux rangées (3, 3) librement enroulés entre les surfaces de chemin de roulement intérieure et extérieure (5a, 5a ; 2a, 2a) des éléments intérieur et extérieur (1, 2) par des cages (8, 8),
dans lequel un élément de roue denté durci (24) est monté sur une extrémité de la partie cylindrique (4b) de la roue de moyeu (4, 4', 31), l'élément d'engrenage (24) étant formé sur sa circonférence extérieure avec une partie d'engrenage (24a) et sur sa circonférence intérieure avec une partie cannelée (24b) engageant une partie cannelée de moyeu (25, 25') formée sur la circonférence extérieure de la partie cylindrique (4b) de la roue de moyeu (4, 4', 31) ;
dans lequel une surface de contact (24c) de l'élément d'engrenage (24) et une surface de contact de la bague intérieure (7) en butée l'une contre l'autre sont toutes deux meulées ; et
dans lequel les bagues intérieures (5, 7) sont fixées de manière immobile dans l'axe dans une condition dans laquelle une quantité prédéterminée d'une précontrainte d'appui est appliquée aux bagues intérieures (5, 7) par l'intermédiaire de l'élément d'engrenage (24)
**caractérisé en ce que**
la rugosité de surface (Ra) de la surface de contact (24c) de l'élément d'engrenage (24) en contact avec la bague intérieure (7) est fixée à 1,6 ou moins (Ra≦1,6), et **en ce que** le filetage extérieur (31a) est formé sur l'extrémité de la partie cylindrique (4b) de la roue de moyeu (31), et **en ce qu'**un écrou de serrage (32) est fixé sur le filetage extérieur (31a) afin de sécuriser les bagues intérieures (5, 7).

2. Appareil de roulement de roue selon la revendication 1, dans lequel une largeur de contact (W) entre l'élément d'engrenage (24) et la partie calfeutrée (4c) ou l'écrou de serrage (32) est fixée à 1 mm ou plus.

3. Appareil de roulement de roue selon la revendication 1, dans lequel l'élément d'engrenage (24) est formé en acier incluant 0,15 - 0,45 % de carbone en poids (% en poids) et durci jusqu'à son noyau par trempage en immersion, et dans lequel la dureté de surface de l'élément d'engrenage (24) est fixée à 40 HRC ou plus.

4. Appareil de roulement de roue selon la revendication 1, dans lequel l'élément d'engrenage (24) est formé en acier au chrome-molybdène incluant 0,15 - 0,3 % de Mo en poids (% en poids), où une couche durcie est formée sur la surface de l'élément d'engrenage (24) par trempage de carburation, et dans lequel la dureté de surface de la couche durcie est fixée à 40 HRC ou plus.

5. Appareil de roulement de roue selon la revendication 1, dans lequel une couche durcie (29) ayant la dureté de surface de 50 - 64 HRC est formée sur une partie cannelée de moyeu (25') par un durcissement par induction haute fréquence.
